# EUROPEAN PATENT APPLICATION

(11) **EP 0 849 745 A1**
(43) Date of publication of application: **24.06.1998**
(21) Application number: 97203913.5
(22) Date of filing: 12.12.1997
(51) Int. Cl.: H01B 3/44, C08L 43/04, C08J 3/24

(54) **A process and an apparatus for making a crosslinked polymer coating and the coating obtained therefrom**

(30) Priority: 17.12.1996 IT MI962634
(71) Applicant: PIRELLI CAVI E SISTEMI S.p.A., 20126 Milano (IT)
(72) Inventor: Pozzati, Giovanni, 21057 Olgiate Olona (Varese) (IT); Colombo, Giuseppe, 24042 Capriate San Gervasio (Bergamo) (IT); Sala, Angelo, 22055 Merate (Lecco) (IT); Campanini, Gian Paolo, 27053 Lungavilla (Pavia) (IT)
(74) Representative: Marchi, Massimo, Dr.

(57) **Abstract**

A process for making a silane-crosslinked polymer coating on a thread-like element by extruding a molten thermoplastic material comprising a silane-crosslinkable polymer and optional additives, the presence of a crosslinking catalyst being also provided, wherein said crosslinking catalyst is deposited on the said thread-like element before said molten thermoplastic material is extruded on it.

## Description

The present invention relates to a process and to an apparatus for making a silane-crosslinked polymer coating. It also relates to the coating obtained therefrom.

More particularly, the present invention relates to a process and to an apparatus for extruding a silane-crosslinkable polymer coating, on a thread-like element such as, for example, an electrical conductor.

The technique of crosslinking by means of silanes is well known (GB-1 234 034, GB-A-1 286 460, GB-A-1 357 549, GB-A-1 396 120, GB-1 406 680, GB-A-1 412 628, GB-A-1 450 934, GB-A-1 526 398, GB-A-1 534 299, GB-A-1 579 446 and GB-A-1 581 041). It comprises essentially two reactions: grafting and crosslinking.

In general, the graft is executed by exposing a suitable polymer to a compound capable of generating free radical sites on said polymer, on which a suitable silane is then grafted.

The so grafted polymer is then exposed to an agent capable of causing hydrolysis of at least one suitable hydrolysable group present on the silane and the functional groups resulting from said hydrolysis are condensed together, preferably in the presence of a suitable crosslinking catalyst.

An example of said technique is illustrated in the following scheme:

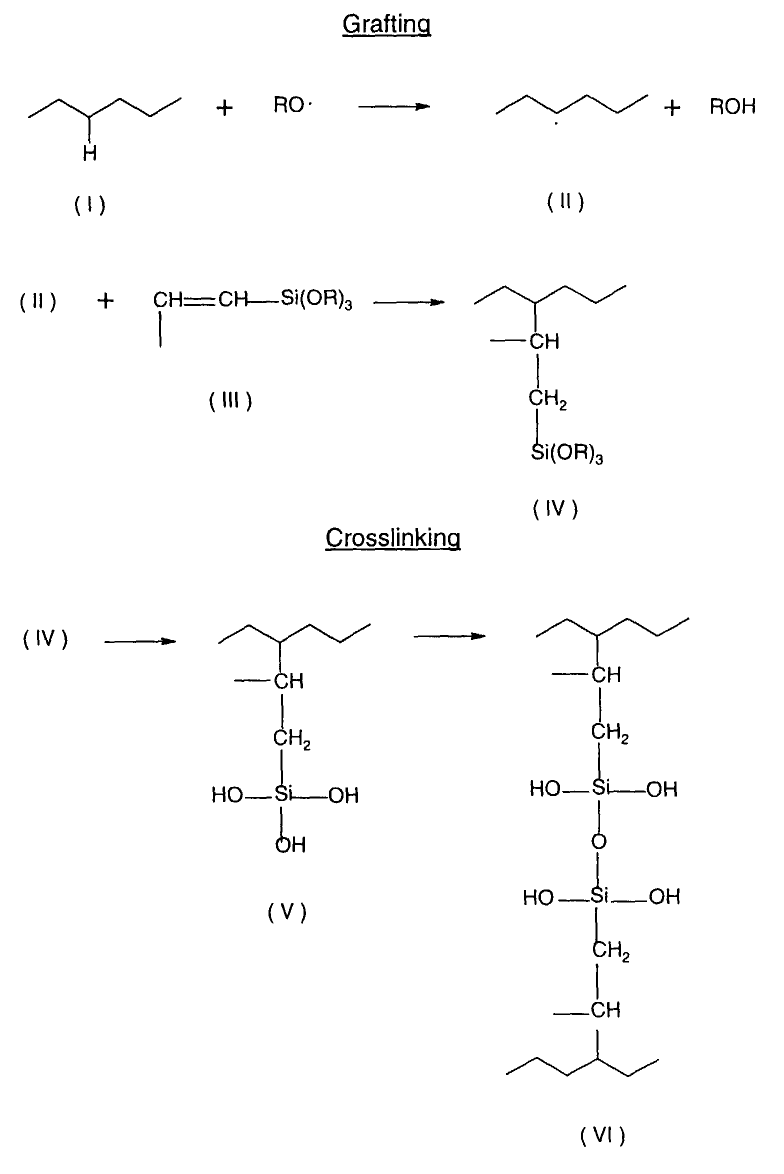

Examples of suitable polymers are polyolefins and olefin copolymers.

Typical examples of polyolefins are the several types of polyethylene such as polyethylene (PE), low density polyethylene (LDPE), very low density polyethylene (VLDPE), polyethylene prepared by metallocenes and the like.

Examples of suitable olefin copolymers are copolymers obtained by copolymerization of one or more olefins one with the other or with other monomers. The term "olefin copolymer" comprises, but is not limited to, akylene/acrylate copolymers, alkylene/vinyl acetate copolymers, and polyvinylchloride.

Typical examples of suitable copolymers are copolymers of ethylene with propylene and/or butylene, ethylene/ethyl acrylate copolymers and ethylene/vinyl acetate copolymers.

Examples of compounds capable of generating, on the polymer, free radical sites to promote grafting of a suitable silane are peroxides and peresters. Typical examples of peroxides are dibenzoyl-, dichlorobenzoyl-, dicumyl-, tert-butylcumyl-, ditert-butyl- and dilauryl-peroxide. Typical examples of peresters are peracetate and tert-butyl perbenzoate.

The silanes used according to this technique must have (i) a group capable of making a covalent link with the carbon atom of the polymer on which the free radical has been formed and (ii) at least one group, preferably two, even more preferably three hydrolysable groups. Preferably, said groups are hydrolysable in the presence of water.

Examples of suitable silanes are alkylen-trialkoxy-silanes. Typical example of a preferred silane is vinyl-trimethoxy-silane (VTMS).

Typical example of a grafted polymer is LDPE grafted with VMTS by heating in the presence of dicumyl-peroxide (DCP).

Alternatively, the grafted polymer may also be obtained via copolymerization by adding a suitable vinylsilane to at least one of the other monomers already mentioned above.

The second type of reaction (crosslinking) is preferably carried out in the presence of water and of a crosslinking catalyst.

Examples of suitable crosslinking catalysts are Lewis acids. Examples of preferred crosslinking catalysts are organic titanates, metal carboxylates and metal naphthenates. Examples of suitable metal carboxylates are dibutyl tin dilaurate, stannous acetate, stannous octanoate, zinc octanoate and iron 2-ethylhexanoate. Examples of suitable metal naphthenates are lead and cobalt naphthenates.

A preferred crosslinking catalyst is dibutyl tin dilaurate (DBTL).

Polyethylenes (eg, PE, LDPE, LLDPE) have excellent properties to be employed in the production of articles usable in the electrical field but their maximum operating temperature is of about 70°C. This drawback can be overcome, for example, with the silane-crosslinking technique that raises the operating temperature beyond 90°C, for example, up to 155°C.

Thus, silane-crosslinked polyethylenes are widely used in the extrusion of coatings for electrical cables, especially for low voltage electrical cables.

The most important products available commercially for this purpose are based essentially on the same chemistry (PE, LDPE or LLDPE grafted with VMTS and crosslinked in the presence of moisture and DBTL) but they differ in the extrusion technique.

According to a first technique, the grafted polymer is prepared *in situ* by heat treatment of the polymer with DCP and VMTS, and the material, further comprising DBTL, is extruded. The extruded product is then immersed in hot water or anyway left in the presence of moisture, for a suitable period of time, so as to obtain crosslinking. One drawback of this technique is that it requires the use of specific models of particularly sophisticated extruders, since a careful control is required for thermal profile and for material flows so as to obtain grafting inside the extruders themselves and to prevent possible pre-crosslinking phenomena inside them.

A second technique implies a separate preparation of a grafted polymer or of a copolymer having hydrolysable silane side-groups. Said grafted polymer or said copolymer is loaded into an extruder together with a masterbatch comprising a crosslinking catalyst. The material is extruded and then crosslinked in the presence of moisture in a conventional manner.

One disadvantage common to both the above described techniques is that the residues of molten material that remain in the extruder tend to crosslink and to make clots that jeopardise the quality of the product. In this respect it is worth mentioning that, sometimes, the extruder has to be stopped to replace dies, to replace filters and similar operations, even when the batch of molten material has not been completely extruded.

In such cases, and in any case after prolonged periods of extrusion, it is thus necessary to subject the extruder to a particular type of cleaning that is performed, for instance, by extruding polyethylene as such in order to remove residues of crosslinkable material or by dismantling the machine.

As regards both insulating and non-insulating cable coatings, current safety regulations prescribe that flame should not propagate along the cable and, in some cases, also that combustion of the latter should not generate toxic and/or corrosive gases.

However, combustion of cable coatings made of polyethylene-based polymers, such as for example the above described silane-crosslinked polyethylene, does not meet specifications for non-propagation of the flame.

To overcome this drawback, in particular when absence of toxic and/or corrosive gases is required, a high quantity of fire retardant filler is added. An example of a suitable fire retardant filler is magnesium hydroxide.

It has now been observed that extrusion of these mixtures according to the above mentioned known techniques is very difficult for two reasons: because of the moisture present in the fire retardant filler and because of the high viscosity of the material to be extruded.

Both the above mentioned factors cause pre-crosslinking phenomena in the screw and/or in the head of the extruder and, in turn, pre-crosslinking causes irregularities in insulating coating and, in the most serious cases, extrusion is discontinued.

As regards moisture in the fire retardant mixture, it has been observed that if the moisture of the prepared mixture is reduced below 200-250 ppm (with respect to about 500-1000 ppm), pre-crosslinking risks are reduced. This requires a careful drying of the mixture by packaging performed with machines capable of degassing the material and by using special hermetically sealable containers provided with dehydrating products. However, in any event this treatment does not allow to proceed with extrusions for more than a few hours.

As already mentioned above, the second observed phenomenon consists in a large increase of mixture viscosity (silane-crosslinkable polymer/crosslinking catalyst/fire retardant filler), that, for the same extrusion speed, involves a considerable temperature increase of the material at the exit (for example, from about 120°C to about 180°C). This causes pre-crosslinking phenomena in the screw and/or in the head of the extruder, for example due to standstill of the mixture in the screw and/or in the head of the extruder, causing the phenomena described above.

It has now been found that all the above mentioned drawbacks can be overcome if the crosslinking catalyst, instead of being incorporated in the material to be extruded, is deposited on the thread-like element just before the insulating coating is extruded on it.

Therefore, it is a first object of the present invention a process for making a silane-crosslinked polymer coating on a thread-like element by extruding a molten thermoplastic material comprising a silane-crosslinkable polymer and optional additives, the presence of a crosslinking catalyst being also provided, characterized in that said crosslinking catalyst is deposited on said thread-like element just before said molten thermoplastic material is extruded on it.

The thread-like element is, preferably, an electrical conductor. Even more preferably, it is a low voltage electrical conductor.

The crosslinkable polymer according to the present invention comprises a polymeric chain to which silane units comprising at least one group, preferably two, even more preferably three, hydrolysable groups, are covalently bonded. Preferably, said groups are hydrolysable in the presence of water. Said silane units may have been linked to the polymeric chain, according to known techniques, by radical grafting or by copolymerization. Examples of suitable silane units comprising three water-hydrolysable groups are trialkoxy-silanes. Typical example of a preferred silane comprising three water-hydrolysable groups is trimethoxy-silane.

Examples of compounds capable of providing said silane groups are the following: γ-methacryloxy propyltrimethoxy silane, methyltriethoxy silane, methyltris-(2-methoxyethoxy) silane, dimethyldiethoxy silane, vinyltris-(2-methoxyethoxy) silane, vinyltrimethoxy silane, vinyl triethoxy silane, vinyl dimethoxyethoxy silane, octyltriethoxy silane, isobutyltriethoxy silane, isobutyltrimethoxy silane and mixtures thereof.

Preferably, the polymeric chain is the chain of a polyolefin or of an olefin copolymer.

Typical examples of suitable polyolefin chains are those of the several types of polyethylene: PE, LDPE, VLDPE, PE prepared by metallocenes and the like.

Typical examples of suitable olefin copolymer chains are those of copolymers of ethylene with propylene and/or butylene, of ethylene/ethylacrylate copolymers and of ethylene/vinylacetate copolymers.

Typical example of a grafted crosslinkable polymer is VLDPE grafted with VMTS by heating in the presence of DCP.

Another typical example of a crosslinkable polymer is a copolymer obtained by copolymerization of a trialkoxy-vinyl-silane with one or more comonomers selected from the group comprising olefins, alkyl-acrylates and vinylacetate.

Preferably, the crosslinking catalyst is selected from the group comprising organic titanates, metal carboxylates and metal naphthenates. Examples of metal carboxylates are dibutyl tin dilaurate, stannous acetate, stannous octanoate, zinc octanoate and iron 2-ethylhexanoate. Examples of naphthenates are lead and cobalt naphthenates.

The preferred crosslinking catalyst is dibutyl tin dilaurate (DBTL).

The additives that may be added to the molten thermoplastic material vary widely, according to parameters well-known to one skilled in the art, depending on the features that are to be conferred to the coating. Typical examples are: inert fillers, fire retardant fillers, reinforcing fillers, processing aids, coupling agents, stabilizers, coloured pigments and the like.

Preferably, the fire retardant filler is a hydrated mineral filler such as for example magnesium hydroxide and/or aluminium hydroxide.

Generally, the total quantity of additives, with respect to the total quantity of extruded material, ranges from 30% to 70% by weight.

In particular, the fire retardant filler ranges from 40% to 60% by weight with respect to the total weight of extruded material.

The thickness of the coating extruded by the process of the present invention ranges from 0.1 to 2.5 mm, preferably from 0.2 to 1 mm.

The thickness of the thread-like element on which the catalyst is deposited may vary considerably, as said element may be either an electrical conductor as such, or an electrical conductor previously coated with a polymer coating of different thickness.

The cross-section of the thread-like element, when the latter is an electrical conductor, ranges generally from 0.1 to 1,000 mm². For example, in the case of low voltage cables, said cross-section ranges from 0.5 to 70 mm².

When the thread-like element is an electrical conductor, it may also be a combination of thread-like elements.

The speed of the extrusion line, hereinafter indicated as "extrusion speed", varies, on the other hand, depending on the type of extruder used and to the cross-section of the thread-like element on which the coating is extruded. For example, a conductor with a cross-section of 0.6 mm² (consisting, for example, of 12 wires with a diameter of 0.25 mm each and an overall diameter of 0.9 mm) may be coated with a polymer coating at a speed of about 500÷600 m/min, while a conductor with a cross-section of 5 mm², typically made by 70 wires with a diameter of 0.3 mm each and an overall diameter of 2.9 mm, may be coated at a speed of 200 m/min.

In general, the extrusion speed ranges in relation to the diameter of the thread-like element from 10 to 800 m/min. Typically the extrusion speed varies from 200 to 600 m/min.

Another advantage of the present invention is the fact that, by not adding the catalyst to the molten material to be extruded, it is possible to use amounts of catalyst that are larger than those used according to conventional techniques wherein the upper limit is determined by the amount causing pre-crosslinking of the material not yet extruded. Conversely, since larger quantities may be added, crosslinking of the coating extruded according to the process of the present invention is faster. The crosslinking reaction is indeed quite fast even in air. Usually, after 7-10 days of exposure to air, the coatings of the present invention attain a crosslinking degree similar to that reached after 16 hours in water at 80°C and in any case sufficient to pass the tests required by the specification.

Generally, the quantity of crosslinking catalyst deposited on the thread-like element will be equal to about 0.1 - 4 g per kilogram of extruded material. Preferably, 0.3 - 3 g/Kg. The upper limit is determined by mechanical problems in the extrusion head and is related to the wire dimensions.

Optionally, the thread-like element may be an electrical conductor coated with a first polymer coating. In such a case, the crosslinking catalyst is deposited on said first coating just before the molten silane-crosslinkable thermoplastic material is extruded on it.

In a preferred embodiment, the inner coating has insulating properties and has a thickness ranging from 0.3 to 2 mm and the outer coating is a sheath having a thickness ranging from 1 to 3 mm.

The apparatus for performing the process of the present invention consists essentially in a circuit for feeding a fluid, capable of catalysing crosslinking of a silane-crosslinkable polymer, connected to a head for the application of said fluid wherein a thread-like element passes. Said circuit conveys the desired and controlled quantity of catalysing fluid to said application head arranged, preferably, just a few centimeters upstream from the extrusion head. The thread-like element passes first in said application head where it is coated with the desired and controlled quantity of catalysing fluid and, immediately afterward, in the extrusion head where it is coated with a uniform layer of molten silane-crosslinkable thermoplastic material.

Therefore, a second object of the present invention is an apparatus for distributing a fluid capable of catalysing the crosslinking of a silane-crosslinkable thermoplastic polymer, characterized in that it consists of a circuit for feeding said fluid and of an application head for uniformly delivering a calculated quantity of said fluid on a thread-like element passing inside said head.

Preferably, in said application head, the delivery of said fluid takes place by means of an equalizing and delivery ring inside which said thread-like element passes.

Said equalizing and delivery ring is in hydraulic communication with said feeding circuit and is endowed with microchannels or with a porous stainless steel baffle for the uniform delivery of said fluid on the surface of said thread-like element.

The quantity of fluid catalyst delivered by said application head is controlled and metered by means of a metering pump that may be driven in three different ways: independently, by line synchronism and by synchronism with respect to the number of revolutions of the extruder screw. Said operating ways will be described in detail hereinafter.

Generally, the application head delivers from about 0.1 to about 4 g of catalyst per kilogram of extruded molten material.

In the particular case of DBTL, the quantity of catalyst delivered is about 0.3 - 1 g per kilogram of extruded molten material.

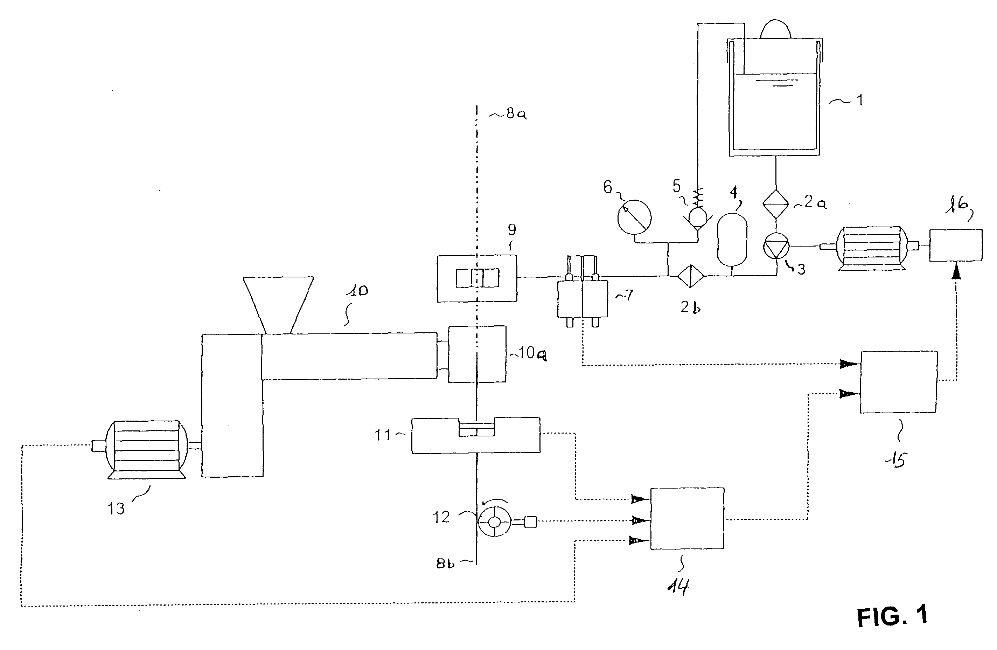

An example of embodiment of the apparatus of the present invention is illustrated in the enclosed Fig. 1.

The apparatus of the present invention comprises a tank 1. Preferably, said tank 1 is thermostated to bring the viscosity of the fluid catalyst or of a possible solution of crosslinking catalyst to a pre-established level. In the illustrated example, the fluid is DBTL and its viscosity drops sharply in the temperature range of from 20° to 40°C.

From said tank the fluid flows to a prefilter 2a and to a single-cylinder metering pump 3. From the latter, the fluid is sent to a dampening plenum chamber 4, that reduces the pressure oscillations caused by the single-cylinder metering pump 3, then to a second filter 2b, to a flow rate meter 7 and, eventually, to an application head 9 where a preselected and controlled quantity of fluid is delivered uniformly on the thread-like element 8a. The apparatus further comprises a pressure gauge 6 and an excess pressure valve 5 with a by-pass conduit. If a predetermined maximum pressure limit is exceeded, the excess pressure valve 5 opens and this is revealed on the control panel (not shown).

The thread-like element 8a then passes in the extrusion head 10a where it is coated with an insulating coating of molten silane-crosslinkable thermoplastic material. Preferably, the application head is located just a few centimeters upstream from the extrusion head.

The coated thread-like element 8b then passes through a device 11 for measuring its diameter and a device 12 for measuring the speed.

The single-cylinder metering pump 3 may be driven according to three different methods.

The first method is independent of the speed of the extrusion line and of the diameter of the extruded insulating coating. In this case the single-cylinder metering pump 3 is driven by means of on-off and up-down controls located on the control panel (not shown). This driving method of the single-cylinder metering pump 3 is used for operations of calibration and checking of the unit and in the case of tests on new materials.

The second method is by line synchronism. In this case, a PLC (Programmable Logic Controller) processor 14 receives analogic signals about the line speed and the diameter of the thread-like element 8b from the device 12 for measuring the speed and from the device 11 for measuring the diameter. The PLC processor 14 determines the quantity of molten material extruded per time unit by the extruder 10 and determines the quantity of fluid catalyst that is to be delivered per time unit by the application head 9 in relation to the quantity of molten material extruded by the extruder 10. The information is sent to a PLC processor 15 where the peculiar curve of the single-cylinder metering pump 3 is stored and the PLC processor 15 acts directly on the inverter 16 of the single-cylinder metering pump 3 and, if necessary, varies the rotation speed of the pump. In the case of variation, the PLC processor 15 checks that, once the variation has occurred, the flow rate measured by the flow rate meter 7 is actually that required by the PLC processor 14 and, if necessary, makes a more accurate variation.

The third method is by synchronism with respect to the revolutions of the screw of the extruder 10. In this case, the PLC processor 14 receives an analogic signal about the revolutions of the screw of the extruder 10 from the tachometric dynamo 13, then determines the flow rate of molten material extruded per time unit and then, on the basis of the flow rate so determined, establishes the required quantity of fluid catalyst. This piece of information is sent to the PLC processor 15 that proceeds as indicated for the second driving way (line synchronism).

The process and the apparatus of the present invention allow to obtain insulating coatings comprising more than 50% of fire retardant filler of the hydrated mineral type and to extrude said coatings with a high flow rate and speed. Said insulating coating is new and cannot he obtained according to the prior art techniques.

Thus, a third object of the present invention is a silane-crosslinked polymer insulating coating comprising at least 50% by weight of fire retardant filler, said coating passing the thermopressure test according to French specification NF F 63-808, carried out according to the method set forth in specification NF C 32-029. Preferably, said fire retardant filler is of the hydrated mineral type. Typical examples of preferred fire retardant fillers are magnesium and/or aluminium hydroxides.

A typical example of a composition crosslinkable by the process of the present invention is indicated in the following Table 1 wherein the Melt Flow Index has been determined according to ASTM D 1238 specification and the density according to ASTM D 1505 specification.

**TABLE 1**

| **COMPONENTS** | **PARTS (p/p)******* |
|---|---|
| VLDPE (Clearflex™, Enichem) (MFI = 3g/10 min at 190°C, d = 0.9g/cm³; | 100 |
| Magnesium hydroxide (Kisuma™ 5, Mitsui) (average particle dimension = 1 µm; specific area = 5 m²/g) | 120 |
| Phenolic antioxidant (Irganox™ 1010, Ciba-Geigy) | 0.5 |
| Phosphite antioxidant (Irganox™ PS 800, Ciba-Geigy) | 0.3 |
| Anticopper additive (Irganox™ MD 1024, Ciba-Geigy) | 0.5 |
| Vinyl trimethoxy silane (Silane A 171, Osi) | 1.85 |
| Butyl cumyl peroxide (BCUP, Peroxid Chemie) | 0.065 |

| | |
|---|---|
| * parts by weight | |

The following Table 2 illustrates the operating conditions and the results obtained extruding the composition of Table 1 according to the process of the present invention.

In examples 1-6 crosslinking was carried out in air for 7 days, while in examples 7 and 8 it was carried out in water at 80°C for 16 hours, since in air, after 30 days, the hot-set and thermopressure tests were not passed.

The hot-set values were determined according to CEI 2034 specification, at 200°C and 0.2 MPa. The thermopressure values were determined according to NF F 63-808 specification, at 125°C and K = 0.6, with a tension of 10,000 V.

Conversely, the comparison examples were carried out according to the prior art technique, adding the catalyst to the material to be extruded.

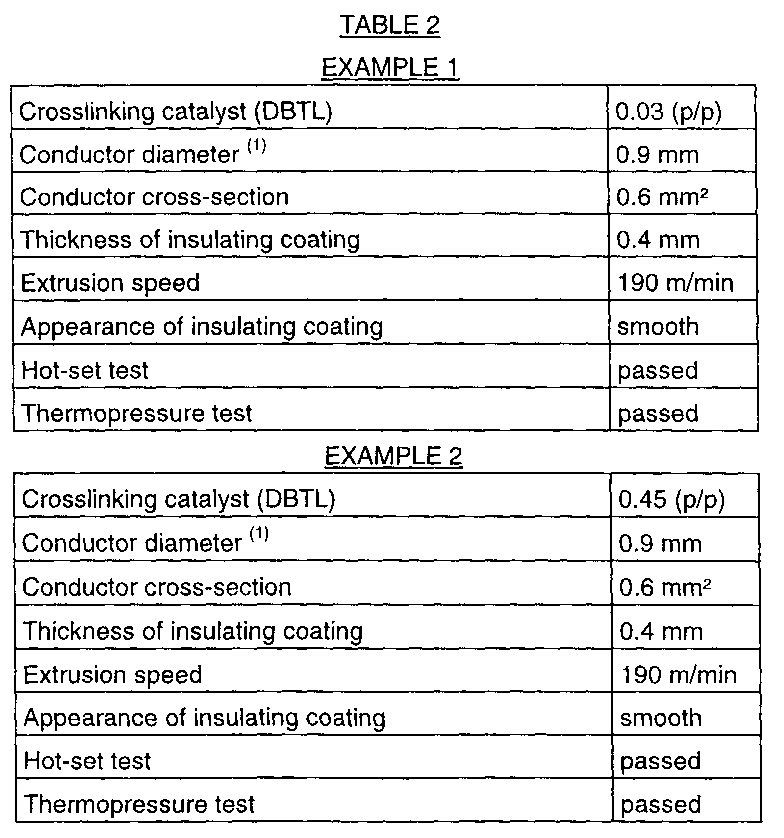

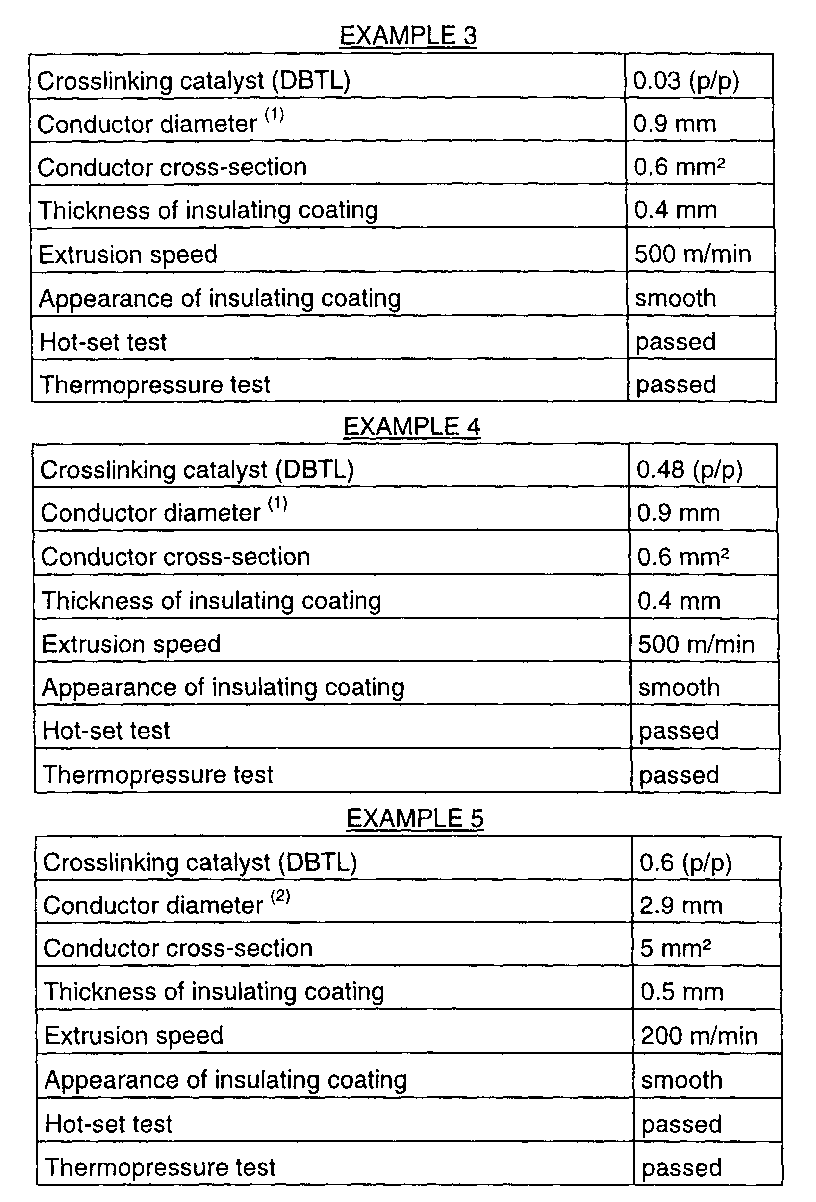

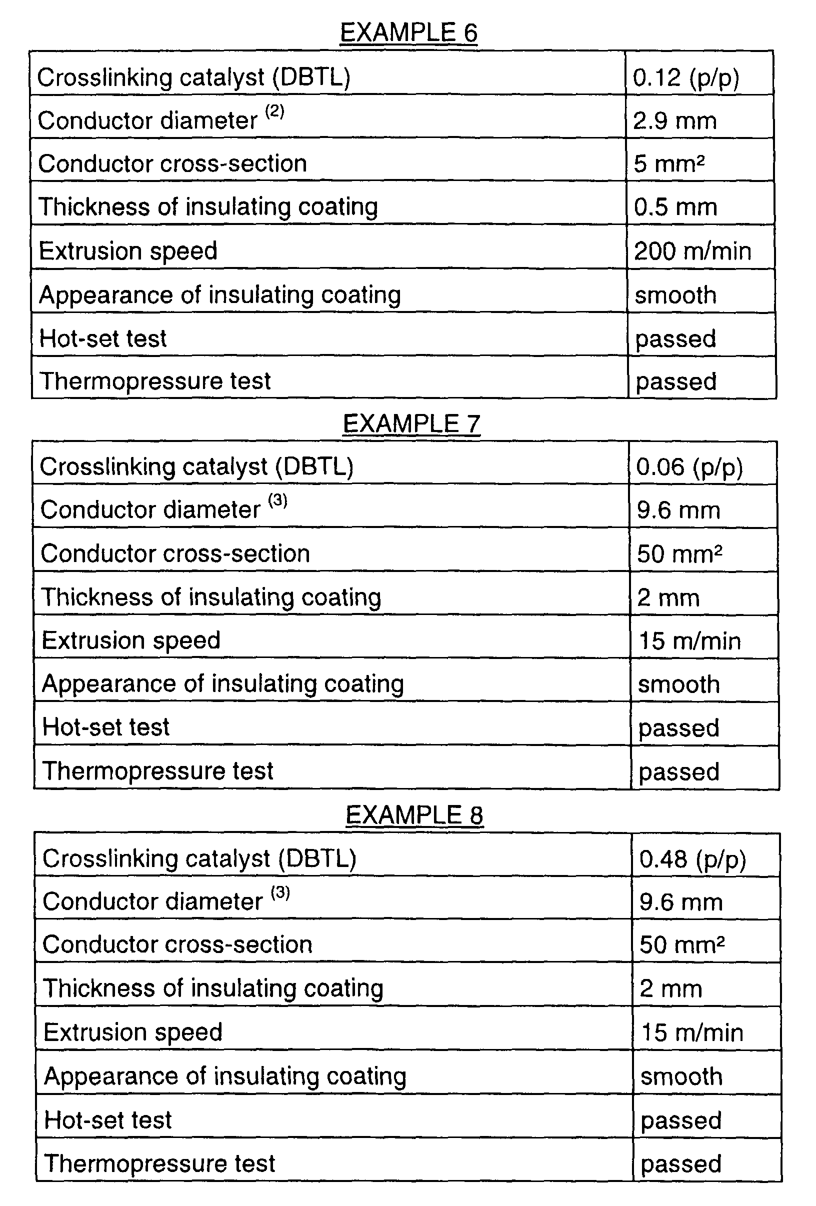

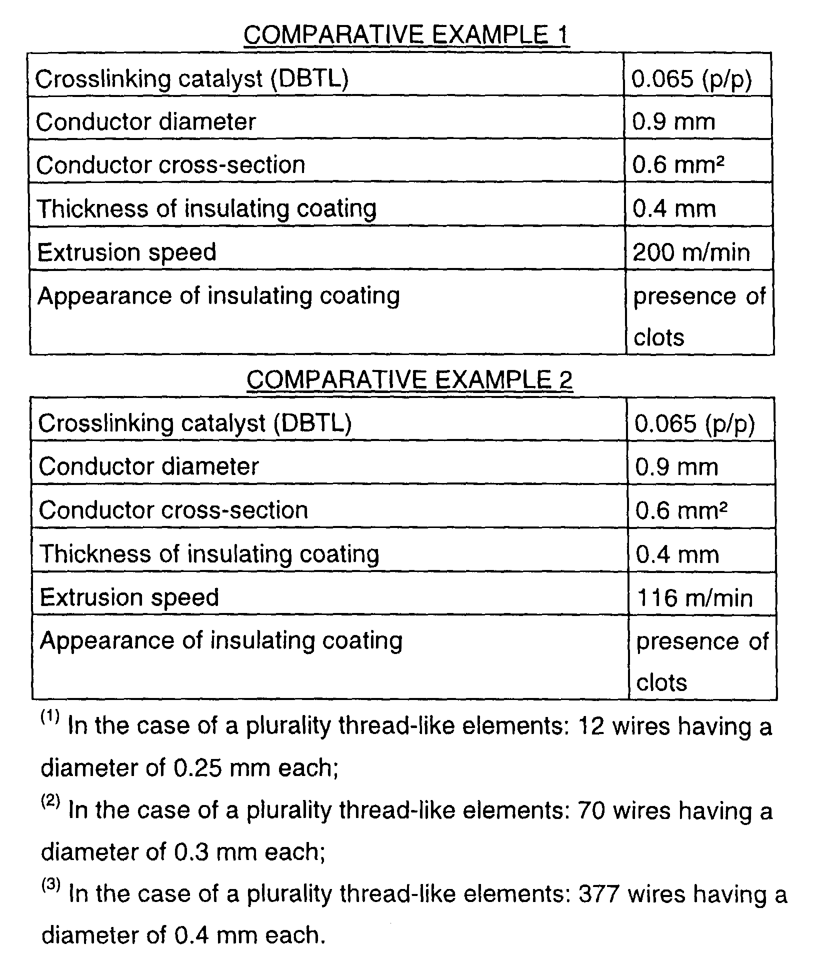

## Claims

1. A process for making a silane-crosslinked polymer coating on a thread-like element by extruding a molten thermoplastic material comprising a silane-crosslinkable polymer and optional additives, the presence of a crosslinking catalyst being also provided, characterized in that said crosslinking catalyst is deposited on said thread-like element before said molten thermoplastic material is extruded on it.

2. A process according to claim 1, characterized in that the coating is an insulating coating.

3. A process according to claim 1 or 2, characterized in that the thread-like element is an electrical conductor.

4. A process according to claim 3, characterized in that the thread-like element is a low voltage electrical conductor.

5. A process according to any of the claims from 1 to 4, characterized in that the crosslinkable polymer comprises a polymeric chain to which at least one silane unit comprising at least one hydrolysable group is covalently bonded.

6. A process according to claim 5, characterized in that said hydrolysable group hydrolyses in the presence of water.

7. A process according to claim 5, characterized in that said silane units are trialkoxy-silanes.

8. A process according to claim 5, characterized in that said polymeric chain is the chain of a polyolefin or of an olefin copolymer.

9. A process according to claim 8, characterized in that said polymeric chain is a polyethylene chain.

10. A process according to any of the claims from 1 to 9, characterized in that the crosslinking catalyst is selected from the group comprising organic titanates, metal carboxylates and metal naphthenates.

11. A process according to claim 10, characterized in that the crosslinking catalyst is dibutyl tin dilaurate.

12. A process according to any of the claims from 1 to 11, characterized in that the additive is selected from the group comprising inert fillers, fire retardant fillers, reinforcing fillers, processing aids, coupling agents, stabilizers and coloured pigments.

13. A process according to claim 12, characterized in that the fire retardant filler comprises a hydrated mineral filler.

14. A process according to claim 13, characterized in that the fire retardant filler is magnesium hydroxide or aluminum hydroxide.

15. A process according to claim 12, characterized in that the total quantity of additives, with respect to the total quantity of extruded material, ranges from 30% to 70% by weight.

16. A process according to any of the claims from 12 to 15, characterized in that the fire retardant filler ranges from 40% to 60% by weight with respect to the total weight of extruded material.

17. A process according to any of the claims from 1 to 16, characterized in that the thickness of the extruded coating ranges from 0.1 to 2.5 mm.

18. A process according to any of the claims from 1 to 17, characterized in that the thickness of the extruded coating ranges from 0.2 to 1 mm.

19. A process according to any of the claims from 1 to 18, characterized in that the extrusion speed ranges from 10 to 800 m/min.

20. A process according to claim 19, characterized in that the extrusion speed ranges from 200 to 600 m/min.

21. A process according to any of the claims from 1 to 20, characterized in that the quantity of crosslinking catalyst deposited on the thread-like element ranges from 0.1 to 4 g per kilogram of extruded material.

22. A process according to claims 1 and 2, characterized in that the thread-like element is an electrical conductor coated with a first polymer coating and in that the crosslinking catalyst is deposited on said first coating just before the molten silane-crosslinkable thermoplastic material is extruded on it.

23. A process according to claim 22, characterized in that the inner coating has insulating properties and has a thickness ranging from 0.3 to 2 mm and the outer coating is a sheath having a thickness ranging from 1 to 3 mm.

24. An apparatus for distributing a fluid capable of catalysing the crosslinking of a silane-crosslinkable thermoplastic polymer, characterized in that it consists of a circuit for feeding said fluid and of an application head for uniformly delivering a calculated quantity of said fluid on a thread-like element passing inside said head.

25. An apparatus according to claim 24, characterized in that an equalizing and delivery ring inside which said thread-like element passes are provided in said application head, said equalizing and delivery ring being in hydraulic communication with said feeding circuit.

26. An apparatus according to claim 25, characterized in that said equalizing and delivery ring is endowed with microchannels for the uniform delivery of said fluid on the surface of said thread-like element.

27. An apparatus according to claim 25, characterized in that said equalizing and delivery ring is endowed with a porous stainless steel baffle for the uniform delivery of said fluid on the surface of said thread-like element.

28. An apparatus according to any of the claims from 24 to 27, characterized in that the quantity of fluid catalyst delivered by said application head is controlled and metered by means of a metering pump that may be driven independently, by line synchronism or by synchronism with respect to the number of revolutions of the extruder screw.

29. An apparatus according to any of the claims from 24 to 28, characterized in that said application head delivers a quantity of fluid catalyst ranging from 0.1 to 4 g per kilogram of extruded molten material.

30. An apparatus according to any of the claims from 24 to 29, characterized in that said fluid is dibutyl tin dilaurate.

31. An apparatus according to claim 30, characterized in that the quantity of dibutyl tin dilaurate delivered ranges from 0.3 to 1 g per kilogram of extruded molten material.

32. An insulating coating of a silane-crosslinked polymer comprising at least 50% by weight of fire retardant filler, said coating passing the thermopressure test NF F 63-808.

33. A cable comprising a coating according to claim 32.

34. A coating according to claim 32, characterized in that the fire retardant filler comprises a hydrated mineral filler.

35. A coating according to claim 32, characterized in that the fire retardant filler is magnesium hydroxide or aluminium hydroxide.
